# EUROPEAN PATENT APPLICATION

(11) **EP 3 929 108 A1**
(43) Date of publication of application: **29.12.2021**
(21) Application number: 21181123.7
(22) Date of filing: 23.06.2021
(51) Int. Cl.: B65G 1/04, B65G 1/137

(54) **STORAGE SYSTEM**

(30) Priority: 26.06.2020 FI 20205677
(71) Applicant: Nekos Oy, 33800 Tampere (FI)
(72) Inventor: Niemi, Jouni, 33800 Tampere (FI)
(74) Representative: Kolster Oy Ab

(57) **Abstract**

A storage system (10) for loading and unloading storage units (20) stored in successive rows (25) positioned on a base (2) of a storage (1). The storage system (10) comprises at least one crosswise conveyor (11) provided with a handling mechanism (12), at least one lengthwise conveyor (13), a control unit (30) and a database (50) for storing storage unit information (21). The control unit (30) comprises a prediction unit (70) for determining a prediction of the storage units (20) to be loaded into the storage (1) and/or a prediction of the storage units (20) to be unloaded from the storage (1). The control unit (30) is configured to determine to which storage area (1a, 1b) to load and/or from which storage area (1a, 1b) to unload the storage units (20) based on the prediction.

## Description

### FIELD OF THE INVENTION

The invention relates to a storage system intended for loading and unloading storage units stored in successive rows positioned on a base of a storage.

### BACKGROUND OF THE INVENTION

EP-publication 3453646 A1 discloses a storage system for loading and unloading storage units stored in successive rows positioned on a base of a storage. The storage system comprises a crosswise conveyor for carrying storage units, said crosswise conveyor being arranged parallel to said rows in a horizontal direction and directly above said base and being movable in a direction substantially parallel with a plane of the base and perpendicular to its longitudinal direction. The storage system further comprises a handling mechanism with which said crosswise conveyor is provided and which handling mechanism is movable in the longitudinal direction of the crosswise conveyor and comprises means for grasping the storage unit for carrying the storage unit into a row from the crosswise conveyor or vice versa, to unload it from the row. Furthermore, the storage system of EP 3453646 A1 comprises a lengthwise conveyor provided on one end and at the same level of the crosswise conveyor, the lengthwise conveyor being connected to said end of the crosswise conveyor for moving storage units between the crosswise conveyor and the lengthwise conveyor. Furthermore, there is a control unit for controlling the at least one crosswise conveyor, the at least one lengthwise conveyor and the handling mechanism in the at least one crosswise conveyor. The control unit comprises a storage unit information unit provided with a storage unit information means for coupling said storage unit with a storage unit information specific to said storage unit, as well as a database for storing said storage unit information.

The solution of EP 3453646 A1 discloses a storage system that has been proved to be practical and useful for varying needs of storages.

However, there is still an ongoing need for more adaptable and versatile storage systems for single level storages.

### BRIEF DESCRIPTION OF THE INVENTION

An object of the present invention is to provide a novel storage system for single level storage.

The invention is characterized by the features of the independent claim.

The invention is based on the idea of providing a prediction of the storage units to be loaded into the storage and/or a prediction of the storage units to be unloaded from the storage and determining to which storage area to load and/or from which storage area to unload storage units based on at least one piece of information of the storage unit information and the prediction of the storage units to be loaded into the storage and/or to be unloaded from the storage in order to control the position of the crosswise conveyor in relation to the storage areas in the storage.

An advantage of the invention is that the crosswise conveyor of the storage system may be positioned to such a position in the storage that allows a quick response time to load and/or to unload the storage units during the next task or function to be implemented in the storage.

Some embodiments of the invention are disclosed in the dependent claims.

### BRIEF DESCRIPTION OF THE DRAWINGS

In the following the invention will be described in greater detail by means of preferred embodiments with reference to the accompanying drawings, in which
Figure 1 is a schematic perspective view of a storage system at an operating situation of the storage system;
Figure 2 is a schematic top view of the storage system of Figure 1;
Figure 3 is a schematic perspective view of the storage system of Figure 1 at another operating situation; and
Figure 4 is a schematic top view of the storage system of Figure 1 at a third operating situation.

For the sake of clarity, the figures show some embodiments of the invention in a simplified manner. Like reference numerals identify like elements in the figures.

### DETAILED DESCRIPTION OF THE INVENTION

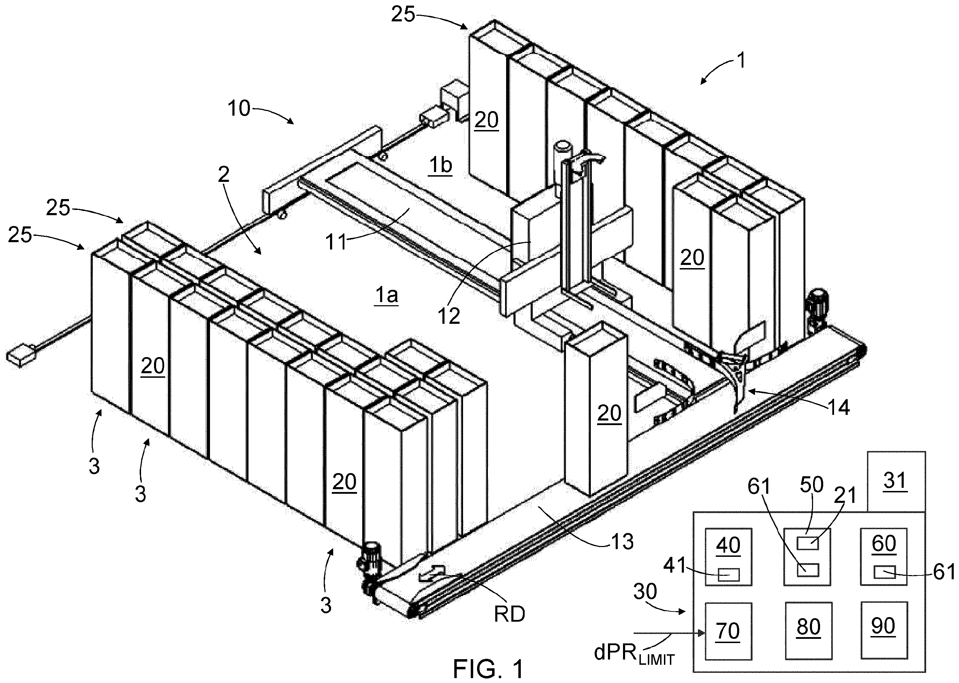

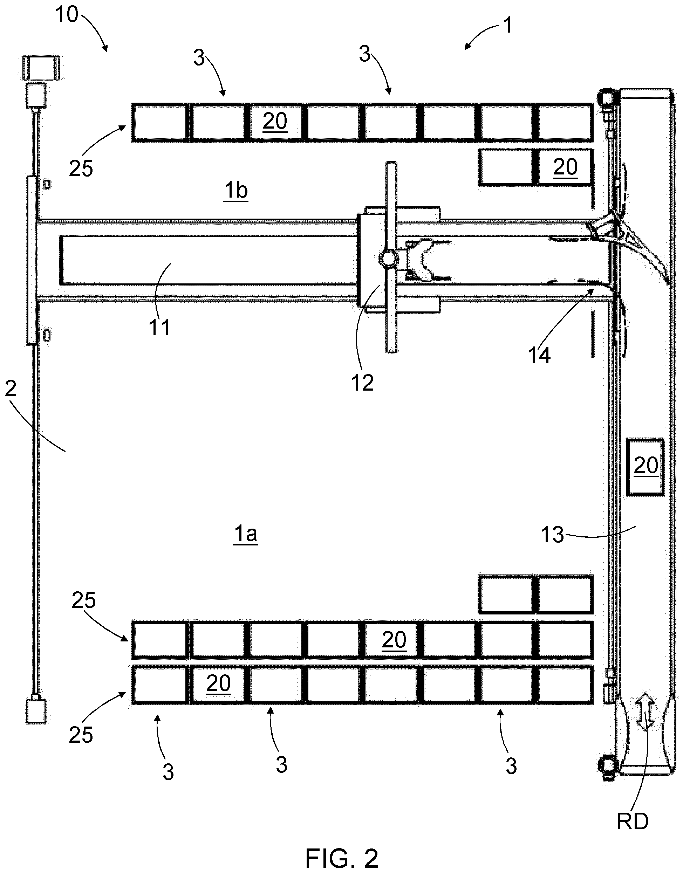

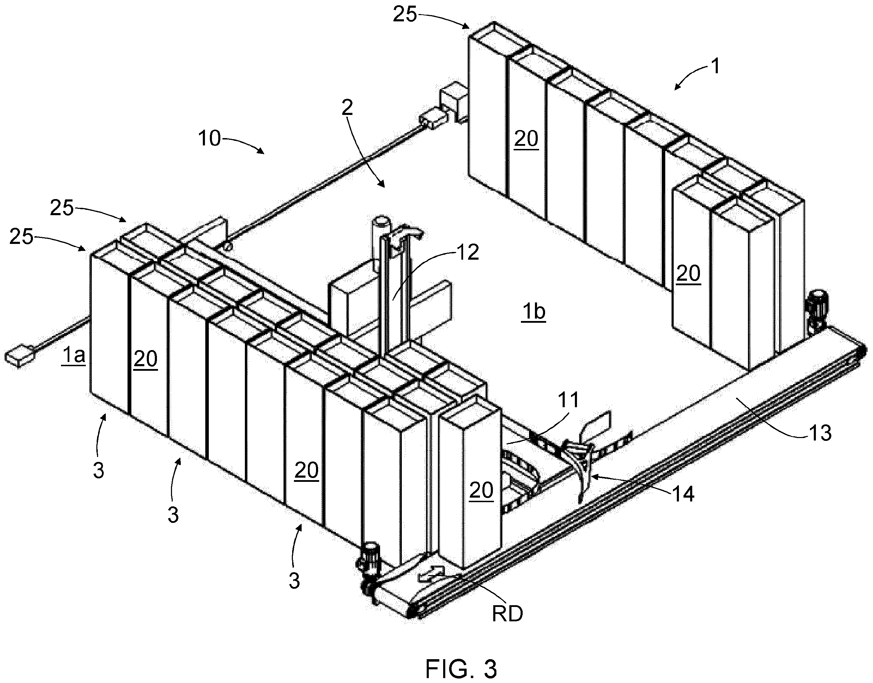

Figure 1 shows schematically, at an operating situation, a perspective view of a storage system 10 for loading and unloading storage units 20 in a single level storage 1 and Figure 2 shows schematically a top view of the storage system 10 of Figure 1. Figure 3, in turn, shows schematically a perspective view of the storage system 10 of Figure 1 at another operating situation of the storage system 10.

The storage system 10 is intended to be operated at a so-called single level storage 1, that comprises a rigid, substantially horizontal base 2, such as a floor of a space of the storage 1. The term "substantially horizontal" refers herein not only an absolutely horizontal plane but also planes that are somewhat slanted, e.g. for leading water in a predetermined direction. The structure of the base may for example be solid, railed, grating, lattice etc.

The storage 1 is used for storing the storage units 20 in a form of successive rows 25 positioned on the base 2 of the storage 1. The storage unit 20 may for example be a case, a container, a crate, a box, a barrel etc. According to an embodiment, the storage unit 20 may be a pile of two or more sub-storage units, wherein the sub-storage unit may be a case, a container, a crate, a box, a barrel etc.

The storage system 10 comprises at least one crosswise conveyor 11, i.e. one or more crosswise conveyors 11. In the embodiment of the Figures there is only one crosswise conveyor 11. The crosswise conveyor 11 is a conveyor having a fixed length, such as a roller conveyor or a belt conveyor. The crosswise conveyor 11 is intended to carry the storage units 20 to one or more rows 25 in the storage 1 for loading the storage units 20 into the storage 1 and from the one or more rows 25 in the storage 1 for unloading the storage units 20 from the storage 1. The crosswise conveyor 11 is arranged parallel to the rows 25 of the storage units 20 and directly above said base 2. The crosswise conveyor 11 is movable in a direction substantially parallel with a plane of the base 2 and substantially perpendicular to a longitudinal direction of the crosswise conveyor 11. Thus, the crosswise conveyor 11 may always assume a specific position relative to a space of the row 25 of the storage units 20 to be handled next.

The crosswise conveyor 11 is provided with a handling mechanism 12 that can be moved in the longitudinal direction of the crosswise conveyor 11. The handling mechanism 12 is provided with means for grasping the storage unit 20 and for carrying it from the crosswise conveyor 11 into one of the rows 25 of the storage units 20, or vice versa, from one of the rows 25 of the storage units 20 onto the crosswise conveyor 11. In case of the storage unit 20 comprising a pile of the sub-storage units, the handling mechanism 12 is arranged to carry the whole pile into one of the rows 25 of the storage units 20, or the whole pile from one of the rows 25 of the storage units 20 onto the crosswise conveyor 11.

The at least one crosswise conveyor 11 divides, in the longitudinal direction thereof, the storage 1 into at least two storage areas, that remain on opposite sides of the respective crosswise conveyor 11 relative to its longitudinal direction. Thus, in the embodiment of the Figures, the single crosswise conveyor 11 divides the storage 1 into two storage areas 1a, 1b, i.e. the first storage area 1a and the second storage area 1b.

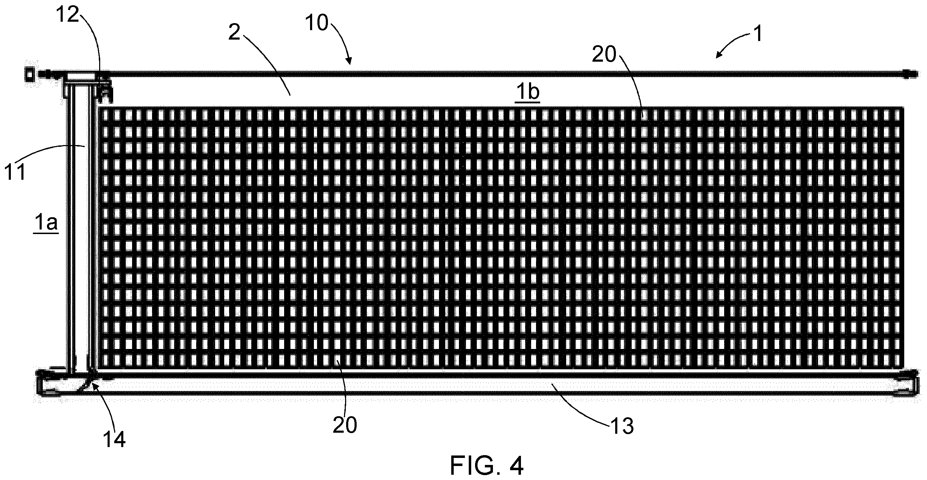

A size or an area of each storage area 1a, 1b is arranged to change dynamically in response to the operational position of the crosswise conveyor 11 in the storage 1, i.e. depending on an operating situation of the storage system 10, i.e. into which storage area 1a, 1b the storage units 20 to be stored in the storage 1 are to be loaded and/or from which storage area 1a, 1b the storage units 20 to be removed from the storage 1 are to be unloaded. In the embodiment of Figures 1 to 3 the first storage area 1a comprises two full rows 25 of the storage units 20 and the second storage area 1b comprises one full row 25 of the storage units 20. In the operating situation of Figures 1 and 2 the storage system 10 is operated at the second storage are 1b and the area of the second storage area 1b is arranged to increase and the area of the first storage area 1a is arranged to decrease in response to the storage units 20 being loaded into the second storage area 1b, or vice versa in response to the storage units 20 being removed from the second storage area 1b. In the operating situation of Figure 3 the storage system 10 is operated at the first storage are 1a and the area of the first storage area 1a is arranged to increase and the area of the second storage area 1b is arranged to decrease in response to the storage units 20 being loaded into the first storage area 1a, or vice versa in response to the storage units 20 being removed from the first storage area 1a. In the operating situation of Figure 4, which shows schematically a top view of the storage system of Figure 1 at a third operating situation, the first storage area 1a is completely empty from the storage units 20 and the second storage area 1b is completely full of the storage units 20, whereby the area of the first storage area 1a is at its minimum and the area of the second storage area 1b is at its maximum.

The storage system 10 comprises also at least one lengthwise conveyor 13, i.e. one or more lengthwise conveyors 13. In the embodiment of the Figures there is only one lengthwise conveyor 13 that is provided on one end of the crosswise conveyor 11 and at the same vertical level with the crosswise conveyor 11. The lengthwise conveyor 13 is connected to said end of the crosswise conveyor 11 for moving storage units 20 between the crosswise conveyor 11 and the lengthwise conveyor 13. At an intersection of the crosswise conveyor 11 and the lengthwise conveyor 13 there is a guide element 14 that guides the movement of the storage units 20 between the crosswise conveyor 11 and the lengthwise conveyor 13.

According to an embodiment, the lengthwise conveyor 13 is a conveyor having a fixed length, such as a roller conveyor or a belt conveyor. According to another embodiment, the lengthwise conveyor 13 is a conveyor the length of which is variable, such as a telescopic conveyor. According to still another embodiment, the lengthwise conveyor 13 is a transfer car or an automatic guided vehicle.

The storage units 20 may be moved in the storage system 10 and in the storage 1 as follows, referring especially to Figures 1 and 2.

The lengthwise conveyor 13 is adapted to supply the storage units 20 coming from the left side of Figures 1 and 2 associated with the storage 1 for arranging the storage units 20 in the storage 1. The running direction of the lengthwise conveyor 13 is thus assumed to be from left to right in the Figures. The running direction may also be changed at need, as it is schematically shown with a double-ended arrow RD indicating the possible running direction of the lengthwise conveyor 13.

The guide element 14 guides the storage unit 20 travelling along the lengthwise conveyor 13 to the crosswise conveyor 11. The crosswise conveyor 11 runs from the direction of the lengthwise conveyor 13 towards the opposite end of the crosswise conveyor 11 and transfers the storage unit 20 along the crosswise conveyor 11 up to the position of the handling mechanism 12. The handling mechanism grasps to the storage unit 20 and loads it 20 from the crosswise conveyor 11 to one of the rows 25 of the storage units 20 in the second storage area 1b.

When unloading the storage units 20 from the storage 1, the operation of the storage system 10 is opposite, whereby the storage units 20 to be unloaded from the storage 1 also exit the storage system 10 from the left end of the lengthwise conveyor 13. Thus, according to an operation embodiment of the storage system 10 disclosed herein, the storage units 20 outgoing from the storage 1 exit the storage system 10 from the same end of the lengthwise conveyor 13 wherein the storage units 20 enter into the storage system 10. However, according to an alternative operation embodiment of the storage system 10, the storage units 20 outgoing from the storage 1 may exit from the storage system 10 through the opposite end of the lengthwise conveyor 13 relative to the end of the lengthwise conveyor 13 wherein the storage units 20 enter into the storage system 10. In this alternative operation embodiment of the storage system 10, the position of the guide element 14 is changed, when necessary, appropriately to guide the incoming storage units 20 onto the crosswise conveyor 11 and the outgoing storage units 20 onto the lengthwise conveyor 13.

The storage 1 of Figures 1 to 4 comprises a single storage system 10. A storage of a very large area may also comprise two or more storage systems 10, that may be separate from each other or combined with each other for co-operating with each other.

The operation of the storage system 10, and thereby a storage unit traffic in the storage 1, is controlled by a control unit 30, which substantially automatically may control for example the operation of the crosswise conveyor 11, the handling mechanism 12, the lengthwise conveyor 13 and the guide element 14. The control unit 30 is shown schematically in Figure 1.

The control unit 30 may be implemented by for example a programmable logic controller (PLC), a personal computer (PC), an artificial intelligence, a microcontroller, a relay arrangement, a numerical control (NC), a mobile device etc., or as a combination of one of more of these. The control unit 30 may comprise a memory or the control unit 30 may be operationally connected to a memory external to the control unit 30. The memory is intended to store programs or other information used in the control of the storage system 10 and is accessible at least by the control unit 30.

The control unit 30 may be configured to control only the operation of a single storage system 10, whereby, in case of a storage comprising two or more storage systems 10, there is a dedicated control unit 30 for each storage system 10. According to another embodiment, the operation of two or more storage systems 10 that are located either at same or even at different locations, may be controlled by a common control unit 30. Furthermore, according to an embodiment, the control unit 30 may be an ERP (Enterprise Resource Planning) -system or the control unit 30 may be some part of an ERP-system or only connected to the ERP-system, which is configured to control an operation of a complete industrial or storing plant. In the last-mentioned option, the ERP-system may thus provide a control system having a higher priority than the control unit 30 dedicated for the specific storage system 10.

Impulse signals to the control unit 30 for starting the control of the operation of the storage system(s) 10 in a specific expected way may be received for example from an operator of the storage system 10, from a system of a transportation company transporting the storage units or from an event taking place in a production of an industrial plant or from a production plan of an industrial plant and received by the control unit 30 from the ERP-system of the industrial plant. The control unit 30 may thus comprise an input/output unit 31 for communicating with the operator of the storage system 10 or with the system external to the storage system 10. The input/output unit 31 may thus comprise a user interface provided with a display and keyboard or some other means for the operator of the storage system 10 to communicate with the control unit 30.

The control unit 30 comprises a storage unit information unit 40 that is provided with a storage unit information means 41 arranged to couple a specific storage unit 20 with a storage unit information 21 specific to that specific storage unit 20, as well as a database 50 for storing said storage unit information 21 for further use. The storage unit information 21 may thus be a data record or a data unit in the database 50. The storage unit information 21 may for example comprise colour codes, graphical codes or symbols, numerical values, text information or any other visually showable symbols or other information or combinations thereof.

The storage unit information unit 40 may comprise a computer program product loadable to the memory reserved for the control unit 30. The computer program product comprises a program code which, when executed by a processor of the control unit 30, realizes said coupling of the storage unit information 21 to the storage unit 20.

The database 50 may be internal to the control unit 30, as schematically shown in Figure 1, or external to the control unit 30. According to an embodiment, the database 50 is arranged in a network server that is connected to the control unit 30 by wired or wireless connection, for example over Internet or Intranet. According to another embodiment, the database is a separate external memory means, such as an USB stick, a SD card or a CD-ROM connectable to the control unit 30.

According to an embodiment, the storage unit information 21 comprises an information about a location of the storage unit 20 in at least one of the storage system 10 and the storage 1, i.e. in the storage system 10 and/or the storage 1. The location of the storage unit 20 in the storage system 10 and/or the storage 1 may be detected in at least one of the conveyors 11, 13, or at least in some predetermined portion thereof, in the handling mechanism 5, and/or on the base 2 of the storage 1.

According to an embodiment, the location of the storage unit 20 in the storage system 10 may be detected at certain spots or locations in the storage system 10, such as at a forward end of a conveyor. According to another embodiment, the location of the storage unit 20 in the storage system 10 may be detected in a continuous way all the path of the storage unit 20 being transported through the storage system 10.

The location of the storage unit 20 in the storage system 10 may be detected for example by a computer vision equipment, photo cell(s), ultrasonic sensor(s), limit switch(s), laser(s), capacitive or inductive sensor(s), radar(s), etc. or some combination thereof. The location may be detected directly from the storage unit 20. In an embodiment the location is detected indirectly, e.g. based on the position measurement system of the conveyor 11, 13 carrying the storage unit 20. The position measurement system of the conveyor may comprise pulse encoder(s), absolute encoder(s), laser encoder(s), position information calculated from the speed of the conveyor, or a combination of one or more of these.

According to an embodiment, the storage unit information 21 comprises an information about the location of the storage unit 20 in the storage 1, i.e. the location or placement of the storage unit 20 in a row 25 of the storage units 20 on the base 2 of the storage 1. The information about the location of the storage unit 20 in the storage 1 may for example be detected at a moment when the handling mechanism 12 transfers the storage unit 20 from the crosswise conveyor 11 to the base 2 of the storage 1.

An advantage of the information about the location of the storage unit 20 in the storage system 10 and/or in the storage 1 is that the operating situation of the storage system 10 may be well-controlled, and the events in the storage system and/or the storage 1 may be foreseen. A further advantage is that the location information of the storage unit 20 makes it possible to an even better control over the storage 1 and additional functions and activities to be carried out by the storage system 10. Therefore, it is for example possible to store the storage units 20 to leave some distance therebetween. This is especially advantageous when storing products that need air circulation in their surroundings. It is also possible to leave quite broad unloaded strips of the free base 2 between the storage units 20, and thus create breaks that may inhibit spreading of a possible fire in the storage 1.

According to an embodiment, the storage unit information 21 comprises an information about a content of a storage unit 20 or about product(s) included in the storage unit 20. This may consist of, or comprise, information of an individual storage unit being arranged in a pile making the storage unit 20. For retrieving this information, the storage system 10 may for example comprise a reader for an RFID tag, a bar code, a QR code, etc. arranged to read corresponding tags in the storage units 20. The information of an individual storage unit 20 may comprise e.g. a type of the storage unit, and/or information about product(s) arranged in the storage unit 20.

According to an embodiment, the storage unit information 21 comprises information about a deliver or supplier of the storage unit 20. An advantage is that the number of the storage units 20 supplied from a certain supplier is known.

According to an embodiment, the storage unit information 21 comprises an orientation information of the storage unit 20. In some storage systems 10 the orientation of the storage unit 20 may be changed. The orientation is especially advantageous information if the shape or structure of the storage unit 20 in its first end differs from the second end thereof. The orientation information can be used in controlling the movements of the handling mechanism 12 during grasping to the storage unit 20.

According to an embodiment, the storage unit information 21 comprises an information about time of loading of the storage unit 20 in the crosswise conveyor 11, and/or the lengthwise conveyor 13, time of the storage unit 20 arriving in the system 10 and/or time of loading the storage unit 20 to the storage 1. An advantage of this is that a time span that the storage unit 20 has been in the storage 1 may be known, allowing for example use of the storage that is close to a first-in-first-out (FIFO) principle to be realized in the storage 1. Thus, the last-in-first-out (LIFO) principle being the practice in some earlier known single level storages may be avoided. This may in practice mean that the handling mechanism 12 is guided to unload the end of the storage 1 comprising the storage units 20 having the longest time span. By contrast, the storage units 20 arriving in the storage may be loaded at another end of the storage.

According to an embodiment, the storage unit information 21 comprises information about a maximum allowable storage period for the storage unit 20. If the said period of time is to be exceeded, the control unit 30 will guide the crosswise conveyor 11 and the handling mechanism 12 thereon to unload the storage unit 20 at convenient time. An advantage is that wastage of the stored items maybe decreased.

According to an embodiment, the area of the storage 1 base 2, or one or more parts of it, may be divided into plurality of storage locations 3 arranged in rows. Each storage location 3 may be reserved to receive only a single storage unit 20, for instance. In response to that, the control unit 30 may comprise a storage location information unit 60 provided with a storage location information means 61 for coupling a specific storage location 3 to a storage location information 4 specific to the said storage location 3. The storage location information means 61 may for example be a computer program product comprising a program code which, when executed by a processor of the control unit 30, realizes said coupling of the storage location information 4 to the storage location 3. The storage location information 4 may be stored in the database 50 for further use and shown through the input/output unit 31.

An advantage of the storage location information unit 60 is that the storage locations 3 may be individualized by the information. The storage location information 4 may for example comprise an information about allowability of a use of the storage location 3. An advantage of this is that a storage location being, for some reason, not available or accessible can be recognized. The handling mechanism 12 may thereby be guided to past said unavailable storage location(s) 3 and to carry the storage unit 20 into a next allowable storage location 3.

The control unit 30 further comprises a prediction unit 70 for determining a prediction of the storage units 20 to be loaded into the storage 1 and/or a prediction of the storage units 20 to be unloaded from the storage 1. The control unit 30 may be configured to determine to which storage area 1a, 1b to load and/or from which storage area 1a, 1b to unload the storage units 20 based on at least one piece of information of the storage unit information 21 stored in the database 50 and the prediction of the storage units 20 to be loaded into the storage 1 and/or to be unloaded from the storage 1 in order to control the position of the crosswise conveyor 11 in relation to the storage areas 1a, 1b in the storage 1.

The prediction of the storage units 20 to be loaded into the storage 1 and/or to be unloaded from the storage 1, i.e. the prediction of at least one of the storage units 20 to be loaded into the storage 1 and the storage units 20 to be unloaded from the storage 1, allows the control of the position of the crosswise conveyor 11 in the storage 1 in such as a manner that the crosswise conveyor 11 is to be positioned in advance to such a position in the storage 1 that allows a quick response time to load and/or to unload the storage units 20 during the next task or function to be implemented in the storage 1. The determination of the prediction of the storage units 20 to be loaded into the storage 1 and/or to be unloaded from the storage 1 may for example relate to at least one of the quality or content of the storage units 20 and a number of the storage units 20 to be handled. Preferably, for minimizing the movements of the crosswise conveyor 11, the storage system 10 is tried to be operated such that the crosswise conveyor 11 remains in the same storage area 1a, 1b as long as possible.

The time span for the prediction of the operations to be carried out in the storage 1 may extend for example from about half an hour to several hours or days, for example up to at least one week.

According to an embodiment, the prediction unit 70 is configured to determine a prediction of a ratio of a number of the storage units 20 to be loaded into the storage 1 and a number of the storage units 20 to be unloaded from the storage 1. According to this embodiment, the prediction unit 70 is configured to retrieve pieces of information relating to the number of the storage units 20 to be loaded into the storage 1 and a number of the storage units 20 to be unloaded from the storage 1 and, on based on that information, to determine the prediction of the ratio between the number of the storage units 20 to be loaded into the storage 1 and the number of the storage units 20 to be unloaded from the storage 1. The pieces of information may be retrieved from an input of an operator, from a system of at least one transportation company transporting the storage units 20 or from the ERP-system of the industrial or storing plant.

According to an embodiment, the control unit 30 comprises a fixed or settable limit value dPR_{LIMIT} for a change of the predicted ratio of the number of the storage units 20 to be loaded into the storage 1 and the number of the storage units 20 to be unloaded from the storage 1. In response to the change of the predicted ratio exceeding the limit value dPR_{LIMIT} the control unit 30 may be configured to control the crosswise conveyor 11 to change the position from the present storage area 1a, 1b to another storage area 1a, 1b. This has the advantage that unnecessary or substantially useless changes of the position of the crosswise conveyor 11 in the storage 1 may be avoided.

According to an embodiment, the control unit comprises a history data unit 70 containing history data of a fixed or settable period of time about realized activity of the storage system 10 and the prediction unit 70 is configured to determine the prediction of the storage units 20 to be loaded into the storage 1 and/or the prediction of the storage units 20 to be unloaded from the storage 1 based on the history data.

The history data unit 70 may comprise history about the realized activity of the storage system 10 that extends to a period of time that is older or longer than the storage unit information 21 regarding the storage units 20 that are present in the storage 1 at the moment in question. According to an embodiment, the history data comprises information about activity of the storage system 10 on daily or weekly basis, or based on periods of 5 to 10 days, for example. According to another embodiment, the history data comprises information about activity of the storage system 10 on hourly basis. According to a third embodiment, the history data comprises information about activity of the storage system 10 on basis of season and off-season of the stored items.

For example, if the history data reveals a high activity in a certain storage area 1a, 1b of the storage 1 every Monday morning, the control unit 30 may control the crosswise conveyor 11 to move to said storage area 1a, 1b already on Sunday evening. Additionally, the history data may highlight periods of time when there will be much more storage units 20 incoming to the storage 1 than outgoing from the storage 1, whereby the control unit 30 may control the crosswise conveyor 11 to move in advance to the storage area 1a, 1b providing the more effective operation of the storage system 10 for the pending task.

According to an embodiment, the storage unit information 21 comprises an information about the time of loading the storage unit 20 into the storage 1, whereby the control unit 30 is configured to determine to which storage area 1a, 1b to load and/or from which storage area 1a, 1b to unload storage units 20 based on the information about the time of loading the storage unit 20 into the storage 1 and the prediction of the storage units 20 to be loaded into the storage 1 and/or to be unloaded from the storage 1. The time of loading the storage unit 20 into the storage 1 may thus be taken into account together with the prediction of the storage units 20 to be loaded into the storage 1 and/or to be unloaded from the storage 1. According to this embodiment it is possible to ensure that at some convenient time of operation of the storage system 10 also the storage units 20 having possibly been a long time in the storage 1 will be unloaded from the storage 1.

According to an embodiment, the storage unit information 21 comprises an information about a maximum allowable storage period for the storage unit 20, whereby the control unit 30 is configured to determine to which storage area 1a, 1b to load and/or from which storage area 1a, 1b to unload storage units 20 based on the information about the maximum allowable storage period for the storage unit 20 and the prediction of the storage units 20 to be loaded into the storage 1 and/or to be unloaded from the storage 1. The maximum allowable storage period for the storage unit 20 may thus be taken into account together with the prediction of the storage units 20 to be loaded into the storage 1 and/or to be unloaded from the storage 1. According to this embodiment it is possible to ensure that at some convenient time of operation of the storage system 10 also the storage units 20 with the maximum allowable storage period being about to end will be unloaded from the storage 1.

According to an embodiment, the control unit 30 is configured to determine to which storage area 1a, 1b to load and/or from which storage area 1a, 1b to unload storage units 20 based on at least one piece of information of the storage unit information 21, the prediction of the storage units 20 to be loaded into the storage 1 and/or to be unloaded from the storage 1 and the storage location information 4. According to this embodiment it is possible to take into account also an allowability of a use of a specific storage location 3 in advance in the control of the crosswise conveyor 11. According to this embodiment it is possible to avoid unnecessary or useless repositioning of the crosswise conveyor 11 in the storage 1.

According to an embodiment, the control unit 30 may comprise an anti-collision system 80 that is arranged to compare the location of the handling mechanism 12 and the location of storage units 20, and to limit the movement of the handling mechanism 12 in case of a risk of a collision. An advantage of this is that interruptions of the storage functions and need for cleaning work caused by collisions may be avoided, or at least minimized. Another advantage is that the speed of the handling mechanism 12 may be increased when there is no risk for collision.

It will be obvious to a person skilled in the art that, as the technology advances, the inventive concept can be implemented in various ways. The invention and its embodiments are not limited to the examples described above but may vary within the scope of the claims.

## Claims

1. A storage system (10) for loading into a storage (1) and unloading from the storage (1) storage units (20) to be stored in successive rows (25) positioned on a base (2) of the storage (1), the storage system (10) comprising
at least one crosswise conveyor (11) for carrying storage units (20), said crosswise conveyer (11) being arranged parallel to said rows (25) in a horizontal direction directly above said base (2) and to divide the storage (1) into the at least two storage areas (1a, 1b),
the crosswise conveyer (11) being movable in a direction substantially parallel with a plane of the base (2) and perpendicular to its longitudinal direction and being provided with a handling mechanism (12) movable in the longitudinal direction of the crosswise conveyor (11) and having means for grasping the storage unit (20) for carrying the storage unit (20) from the crosswise conveyor (11) into a row (25) or vice versa, to unload it from a row (25) to the crosswise conveyor (11), and
at least one lengthwise conveyor (13) which is provided on one end and at the same level of the crosswise conveyor (11) and which lengthwise conveyor (13) is connected to said end of the crosswise conveyor (11) for moving storage units (20) between the crosswise conveyor (11) and the lengthwise conveyor (13), and
a control unit (30) for controlling the at least one crosswise conveyor (11), the at least one lengthwise conveyor (13) and the handling mechanism (12) in the at least one crosswise conveyor (11),
the control unit (30) comprising a storage unit information unit (40) provided with a storage unit information means (41) for coupling said storage unit (20) with a storage unit information (21) specific to said storage unit (20), and
a database (50) for storing said storage unit information (21),
**characterized in that**
the control unit (30) comprises a prediction unit (70) for determining a prediction of the storage units (20) to be loaded into the storage (1) and/or a prediction of the storage units (20) to be unloaded from the storage (1) and
the control unit (30) is configured to determine to which storage area (1a, 1b) to load and/or from which storage area (1a, 1b) to unload the storage units (20) based on at least one piece of information of the storage unit information (21) and the prediction of the storage units (20) to be loaded into the storage (1) and/or to be unloaded from the storage (1) in order to control the position of the crosswise conveyor (11) in relation to the storage areas (1a, 1b) in the storage (1).

2. A storage system as claimed in claim 1, **characterized in that** the prediction unit (70) is configured to determine a prediction of a ratio of a number of the storage units (20) to be loaded into the storage (1) and a number of the storage units (20) to be unloaded from the storage (1).

3. A storage system as claimed in claim 2,**characterized in that** the control unit comprises a limit value (dPR_{LIMIT}) for a change of the predicted ratio of the number of the storage units (20) to be loaded into the storage (1) and the number of the storage units (20) to be unloaded from the storage (1) and that in response to the change of the predicted ratio exceeding the limit value (dPR_{LIMIT}) the control unit (30) is configured to control the crosswise conveyor (11) to change a position from a present storage area (1a, 1b) to another storage area (1a, 1b).

4. A storage system as claimed in any one of the preceding claims, **characterized in that** the control unit comprises a history data unit (80) containing history data of a period of time about realized activity of the storage system (10) and that the prediction unit (70) is configured to determine the prediction of the storage units (20) to be loaded into the storage (1) and/or the prediction of the storage units (20) to be unloaded from the storage (1) based on the history data.

5. A storage system as claimed in any one of the preceding claims, **characterized in that** the storage unit information (21) comprises an information about a time of loading the storage unit (20) into the storage (1).

6. A storage system as claimed in any one of the preceding claims, **characterized in that** the storage unit information (21) comprises an information about a maximum allowable storage period for the storage unit (20).

7. A storage system as claimed in any one of the preceding claims, **characterized in that** control unit (30) comprises a storage location information unit (60) provided with a storage location information means (61) for coupling at least one storage location (3) with at least one storage location information (4) specific to said at least one storage location (3) and stored in the database (50), and that the control unit (30) is configured to determine to which storage area (1a, 1b) to load and/or from which storage area (1a, 1b) to unload storage units (20) based on at least one piece of information of the storage unit information (21), the prediction of the storage units (20) to be loaded into the storage (1) and/or to be unloaded from the storage (1) and the storage location information (4).

8. A storage system as claimed in any one of the preceding claims, **characterized in that** the control unit (30) is a programmable logic controller or an ERP (Enterprise Resource Planning) -system or a part thereof.
